Europäisches Patentamt

European Patent Office

Office européen des brevets

(19)

(11) **EP 0 604 678 B1**

(12) **EUROPÄISCHE PATENTSCHRIFT**

(45) Veröffentlichungstag und Bekanntmachung des Hinweises auf die Patenterteilung:
**29.07.1998 Patentblatt 1998/31**

(51) Int Cl.⁶: **H02J 13/00**, H04B 3/54, H04B 3/56

(21) Anmeldenummer: **92122041.4**

(22) Anmeldetag: **28.12.1992**

(54) **Verfahren zum Betrieb eines Empfängers, der mit Informationen gespeist wird, die über ein elektrisches Energieversorgungsnetz übertragen werden, und Anordnung zur Durchführung des Verfahrens**

Operation method for a receiver fed with information transmitted over electric supply network and arrangement for carrying it

Procédé pour l'opération d'un récepteur alimenté d'informations transmises par réseau d'alimentation électrique et dispositif de réalisation

(84) Benannte Vertragsstaaten:
**AT CH DE LI SE**

(43) Veröffentlichungstag der Anmeldung:
**06.07.1994 Patentblatt 1994/27**

(73) Patentinhaber: **Landis & Gyr Technology Innovation AG**
**6301 Zug (CH)**

(72) Erfinder:
- **Imfeld, Joe**
  **CH-6048 Horw (CH)**
- **Pilloud, Bernard**
  **CH-6312 Steinhausen (CH)**
- **King, Martin Cranston**
  **CH-6300 Zug (CH)**

(56) Entgegenhaltungen:
EP-A- 153 165          DE-A- 2 629 499
US-A- 4 668 934          US-A- 5 066 939

**Beschreibung**

Die Erfindung bezieht sich auf ein Verfahren zum Betrieb eines Empfängers, der mit Informationen gespeist wird, die über ein elektrisches Energieversorgungsnetz übertragen werden, gemäss dem Oberbegriff des Anspruchs 1 und auf eine Anordnung zur Durchführung des Verfahrens gemäss dem Oberbegriff des Anspruchs 9.

Die Anordnung wird z. B. verwendet in Fernsteuerungen, Fernmessungen, Fernzählungen, Rundsteuerungen, Trägerfrequenz-Übertragungen sowie Ermittlungen von Netzzuständen und Netzqualitäten, bei denen Informationen über ein elektrisches Energieversorgungsnetz übertragen werden.

Ein Verfahren der eingangs genannten Art ist aus der Druckschrift US-A-5,066,939 bekannt, in der ein PLC ("power line carrier")-Übertragungsverfahren beschrieben wird, in dem ein ein RF ("radio frequency")-Signal über die drei Leiter, nämlich über den heissen Leiter H, den Null-Leiter N und den Erdleiter G, einer einzigen Phase des Energieversorgungsnetzes übertragen wird. Mittels eines Schalters wird im Empfänger - manuell durch den Benutzer oder automatisch - aus den drei Leitern H, N und G diejenige Zweileiter-Kombination H;N bzw. H;G bzw. G;N ausgewählt, welche bei einer Sprach- oder Telephonübertragung den klarsten Sprachempfang ergibt. Bezüglich der automatischen Umschaltung fehlen jegliche Angaben, wie und wodurch diese zu erfolgen hat.

Ebenfalls bekannt ist die Druckschrift DE-A-26 29 499, in der das Vorhandensein zweier Übertragungsleitungen, nämlich einer Wechselstromtelegraphie- und einer Fernsprechleitung, zwischen zwei Sende/Empfangs-Stationen beschrieben wird, wobei beide Leitungen durch Pilote überwacht werden, die ein Teil der übertragenen Information sind. Die empfangenen Pilotsignale werden auf Pegelabweichung überwacht, welche im Störungsfall ein Störungssignal auslöst, welches die Frequenz des von der Empfangsstation zur Sendestation zurückgesandten Pilotsignals ändert, so dass die letztere Station ebenfalls die Störung erkennt und ihre Sendungen von der gestörten auf die andere, nicht gestörte Leitung umschaltet. Die Übertragungs-Umschaltung erfolgt dabei sowohl in der Sende- als auch in der Empfangs-Station. Es wird kein Energieversorgungsnetz zu Übertragungszwecken verwendet.

In den beiden bekannten Druckschriften wird jeweils die empfangene Information bzw. ein Teil (Pilotsignal) derselben überwacht und zur Umschaltung verwendet und nicht das Ereignis welches die Störung verursacht und einen korrekten Empfang erschwert bzw. verunmöglicht.

Bekannt sind ebenfalls die Druckschriften US-A-4,668,934 und EP-A-0 153 165. In der ersteren wird die Information sowohl als Spannungssignal über die drei Phasen als auch als Stromsignal über den Null-Leiter eines Energieversorgungsnetzes übertragen, wobei beim Empfang die Summe der drei Spannungssignale gebildet wird und eine Logik zwischen dem letzteren und dem Stromsignal das beste Signal auswählt. In der EP-A-0 153 165 wird die gleichzeitige Übertragung eines Träger-Datensignals über die drei Phasen des Energieversorgungsnetzes vorgeschlagen, wobei keine Kanalumschaltung erfolgt. Statt dessen werden die drei Empfangssignalen im Empfänger zu unterschiedlichen Zeiten abgetastet und mathematisch mittels eines Computers das Nutzsignal aus den gestörten Gesamtsignalen herausgefiltert.

Der Erfindung liegt die Aufgabe zugrunde, ein Verfahren und eine Anordnung der eingangs genannten Art zu verwirklichen, welche Angaben bezüglich der Qualität der Übertragung und des Übertragungsweges ergeben, welche unter anderem zu statistischen Zwecken, zur Rettung von provisorisch gespeicherten Messdaten in einen unverlierbaren Speicher ("non volatile memory") und zur Umschaltung des Übertragungsweges verwendet werden können. Im letzteren Fall gestattet das Verfahren und die Anordnung einen korrekten Empfang der über das elektrische Energieversorgungsnetz übertragenen Informationen auch dann, wenn eine oder mehrere Phasen des als Übertragungsweg verwendeten Energieversorgungsnetzes nicht in Ordnung sind und dort Ereignisse auftreten, die den korrekten Empfang der Informationen stören, erschweren oder verunmöglichen.

Die genannte Aufgabe wird erfindungsgemäss durch die im Kennzeichen des Anspruchs 1 bzw. des Anspruchs 9 angegebenen Merkmale gelöst.

Vorteilhafte Ausgestaltungen der Erfindung ergeben sich aus den abhängigen Ansprüchen.

Ein Ausführungsbeispiel der Erfindung ist in der Zeichnung dargestellt und wird im folgenden näher beschrieben.

Es zeigen:

Fig. 1    ein Blockschaltbild einer eine erfindungsgemässe Anordnung enthaltenden Empfangsanordnung,

Fig. 2    ein Blockschaltbild eines Ereignis-Detektors,

Fig. 3    ein Schaltbild eines Steuergerätes,

Fig. 4    ein Schaltbild einer Abtast- und Halte-Schaltung sowie

Fig. 5    ein Schaltbild eines Ereignis-Integrators.

Gleiche Bezugszahlen bezeichnen in allen Figuren der Zeichnung gleiche Teile.

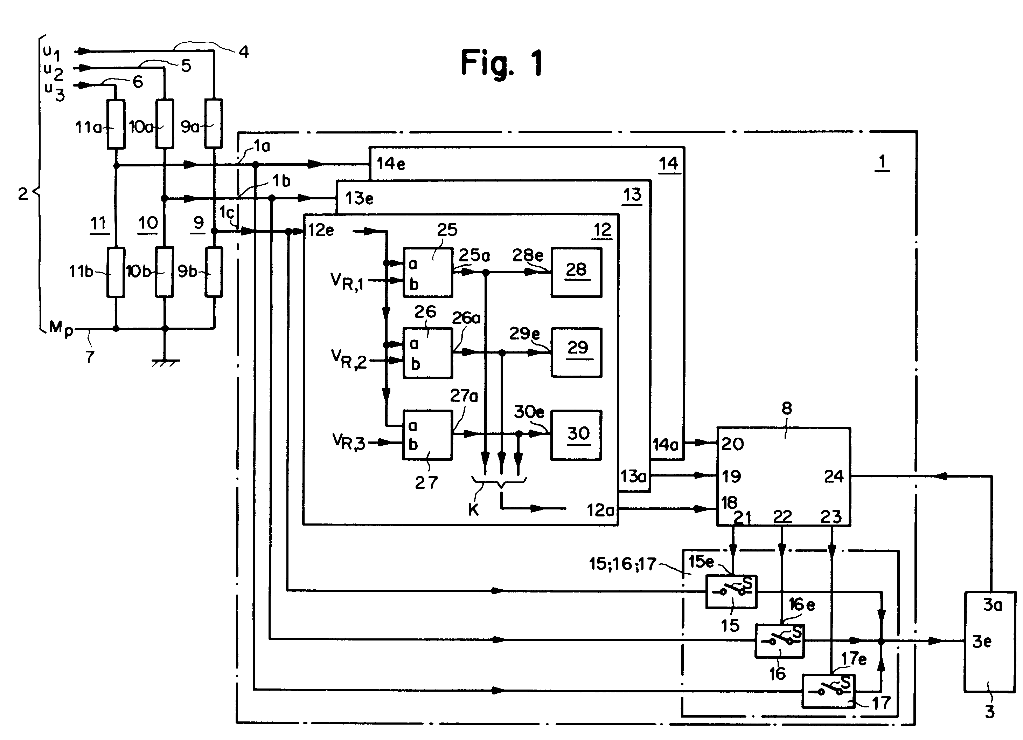

Eine in der Fig. 1 dargestellte Empfangsanordnung enthält zur Durchführung des erfindungsgemässen Verfahrens eine Anordnung 1 zu einem an mindestens einer Phase eines elektrischen Energieversorgungsnetzes 2 angeschlossenen Empfänger 3, der mit Informationen gespeist wird, die von einem nicht dargestellten Sender über das elektrische, in der Regel mehrphasige Energieversorgungsnetz 2 übertragen werden. Die zu übertragenden Informationen sind z. B. Fernmessdaten, Fernzähldaten, Netzzustände des Energieversorgungsnetzes 2, Fernbefehle oder Rundsteuer-Telegramme. Im letzteren Fall ist der Empfänger 3 ein Rundsteuerempfänger oder ein dem Empfang von Rundsteuersignalen dienender Teil eines Elektrizitätszählers.

Nachfolgend gilt die Annahme, dass das Energieversorgungsnetz 2 dreiphasig ist und drei Phasenleiter 4, 5 und 6 sowie einen Null-Leiter 7 aufweist. Der letztere liegt an einem Masse-Potential Mp, während am Phasenleiter 4 eine Spannung $u_1$, am Phasenleiter 5 eine Spannung $u_2$ und am Phasenleiter 6 eine Spannung $u_3$ ansteht. Während der Zeit, während der ein Informationssignal übertragen wird, gilt jeweils die Gleichung:

$$u_j = u_{N,j} + u_{I,j},$$

wobei $u_{N,j}$ eine 50Hz- oder 60Hz-Energieversorgungsspannung und $u_{I,j}$ eine Informationssignal-Spannung jeweils der Phase $j = 1, 2$ oder 3 darstellt.

Die Anordnung 1 enthält ein Steuergerät 8. Für mehrere Phasen des Energieversorgungsnetzes 2, in denen je mindestens ein Ereignis überwacht wird, ist jeweils ein zugehöriger Spannungs-Reduzierer, eine zugehörige Ereignisüberwachungs-Anordnung zwecks Überwachung des Ereignisses und ein zugehöriger Teil einer Schaltanordnung vorhanden. In der Fig. 1 gilt die Annahme, dass diese für alle drei Phasen des Energieversorgungsnetzes 2 vorhanden sind, so dass in der Empfangsanordnung pro angeschlossene Phase des Energieversorgungsnetzes 2 je ein zugehöriger Spannungs-Reduzierer 9, 10 oder 11, je eine zugehörige Ereignisüberwachungs-Anordnung 12, 13 oder 14 sowie je ein zugehöriger Teil 15, 16 oder 17 einer Schaltanordnung 15;16;17 vorhanden sind. Die Ereignisüberwachungs-Anordnungen 12, 13 und 14, das Steuergerät 8 sowie die Schaltanordnung 15;16;17 bilden zusammen die Anordnung 1.

Die Schaltanordnung 15;16;17 enthält einen mehrstelligen Umschalter, der soviele Schaltstellungen besitzt, wie Anzahl Teile 15 bis 17 in der Schaltanordnung 15;16;17 vorhanden sind, oder in anderen Worten, wie Anzahl angeschlossene Phasen vorhanden sind, in denen mindestens ein Ereignis überwacht wird. Der mehrstellige Umschalter besitzt im Betrieb nur einen einzigen geschlossenen Kontakt, welcher beim Umschalten zuerst geöffnet wird bevor ein anderer Kontakt des mehrstelligen Umschalters geschlossen wird. In einer bevorzugten Ausführung, deren Vorhandensein in der Fig. 1 angenommen wurde, besitzt der Umschalter pro Schaltstellung einen Ein/Aus-Schalter S, wobei im Betrieb jeweils nur ein einziger der Ein/Aus-Schalter S geschlossen ist. Die jeweils zu einer Phase gehörenden Teile 15 bis 17 der Schaltanordnung 15;16;17 enthalten dann je einen Ein/Aus-Schalter S, wobei die Ein/Aus-Schalter S der Teile 15 bis 17 der Schaltanordnung 15;16;17 zusammen den mehrstelligen Umschalter bilden. Wenn ein von der Schaltanordnung 15;16;17 angesteuerter Signaleingang 3e des Empfängers 3 einpolig ist, was in der Fig. 1 angenommen wurde, dann können der mehrstellige Umschalter und die Ein/Aus-Schalter S ebenfalls alle einpolig sein. In der Fig. 1 sind die letzteren als Relais-Kontakte dargestellt. In der Praxis werden jedoch vorzugsweise steuerbare Halbleiter-Analogschalter verwendet, wie z. B. in CMOS-Technologie hergestellte sogenannte "Transmissions Gates".

Die Spannungs-Reduzierer 9 bis 11 sind z. B. Spannungswandler oder, wie in der Fig. 1 angenommen, Spannungsteiler. Im letzteren Fall bestehen sie jeweils aus zwei Widerstänen 9a und 9b bzw. 10a und 10b bzw. 11a und 11b, die elektrisch in Reihe geschaltet sind. Die so erhaltenene Widerstand-Reihenschaltung 9a;9b bzw. 10a;10b bzw. 11a;11b ist jeweils zwischen einer zum betreffenden Spannungs-Reduzierer gehörenden Phase und dem Massepotential Mp angeschlossen. D. h. der Eingang des Spannungs-Reduzierers 9 ist am Phasenleiter 4 und Null-Leiter 7 angeschlossen und wird von der Spannung $u_1$ gespeist. Der Eingang des Spannungs-Reduzierers 10 ist dagegen am Phasenleiter 5 und Null-Leiter 7 angeschlossen und wird von der Spannung $u_2$ gespeist, während der Eingang des Spannungs-Reduzierers 11 am Phasenleiter 6 und Null-Leiter 7 angeschlossen ist und von der Spannung $u_3$ gespeist wird. Der gemeinsame Pol der beiden zugehörigen Widerstände 9a und 9b bzw. 10a und 10b bzw. 11a und 11b des Spannungs-Reduzierers 9 bzw. 10 bzw. 11 bildet jeweils dessen Ausgang. Der Ausgang des zu einer bestimmten Phase gehörigen Spannungs-Reduzierers 9, 10 oder 11 ist jeweils mit einem zur betreffenden Phase gehörigen Eingang 1a bzw. 1b bzw. 1c der Anordnung 1 verbunden. Die somit zum Anschluss der Phasen dienenden Eingänge 1a bis 1c der Anordnung 1 sind in der letzteren je auf einen Eingang 12e bzw. 13e bzw. 14e der zur betreffenden Phase gehörenden Ereignisüberwachungs-Anordnung 12 bzw. 13 bzw. 14 geführt und über je den zur betreffenden Phase gehörenden Teil 15 bzw. 16 bzw. 17 der Schaltanordnung 15;16;17 mit dem Signaleingang 3e des Empfängers 3 verbunden.

Das Steuergerät 8 besitzt je einen Eingang 18 bzw. 19 bzw. 20 und je einen Ausgang 21 bzw. 22 bzw. 23 pro Phase. Der erstere ist mit einem Ausgang 12a bzw. 13a bzw. 14a der zur betreffenden Phase gehörenden Ereignisüberwachungs-Anordnung 12 bzw. 13 bzw. 14 und der letztere mit einem Steuereingang 15e bzw. 16e bzw. 17e des zur betreffenden Phase gehörigen Teils 15 bzw. 16 bzw. 17 der Schaltanordnung 15;16;17 verbunden. Je ein Ausgang 12a bzw. 13a bzw. 14a der Ereignisüberwachungs-Anordnungen 12 bis 14 ist somit über das Steuergerät 8 mit einem zugehörigen Steuereingang 15e bzw. 16e bzw. 17e der Schaltanordnung 15;16;17 verbunden. Ein Freigabe-Ausgang 3a des Empfängers 3 ist ausserdem auf einen Freigabe-Eingang 24 des Steuergerätes 8 geführt.

Die Ereignisüberwachungs-Anordnungen 12 bis 14 sind identisch aufgebaut und enthalten jeweils pro zu überwachendem Ereignis einen Ereignis-Detektor 25 bzw. 26 bzw. 27 und einen Ereignis-Zähler 28 bzw. 29 bzw. 30, die beide jeweils in der angegebenen Reihenfolge in Reihe hintereinander geschaltet sind. D. h. ein Ausgang 25a des Ereignis-Detektors 25 ist mit einem Eingang 28e des Ereignis-Zählers 28, ein Ausgang 26a des Ereignis-Detektors 26 mit einem Eingang 29e des Ereignis-Zählers 29 und ein Ausgang 27a des Ereignis-Detektors 27 mit einem Eingang 30e des Ereignis-Zählers 30 verbunden. Die Ereignis-Detektoren 25 bis 27 besitzen je einen ersten Eingang a und je einen zweiten Eingang b. Die ersten Eingänge a der drei Ereignis-Detektoren 25 bis 27 sind miteinander verbunden und bilden zusammen den Eingang 12e bzw. 13e bzw. 14e der betreffenden Ereignisüberwachungs-Anordnung 12 bzw. 13 bzw. 14. Am zweiten Eingang b der drei Ereignis-Detektoren 25 bis 27 liegt jeweils eine Referenz-Gleichspannung $V_{R,1}$ bzw. $V_{R,2}$ bzw. $V_{R,3}$. In jeder der drei Ereignisüberwachungs-Anordnungen 12 bis 14 ist jeweils der Ausgang 25a bzw. 26a bzw. 27a eines einzigen der drei zugehörigen Ereignis-Detektoren 25 bis 27 auf den Ausgang 12a bzw. 13a bzw. 14a der betreffenden Ereignisüberwachungs-Anordnung 12 bzw. 13 bzw. 14 geführt, was in der Fig. 1 symbolisch durch eine geschweifte Klammer K dargestellt ist.

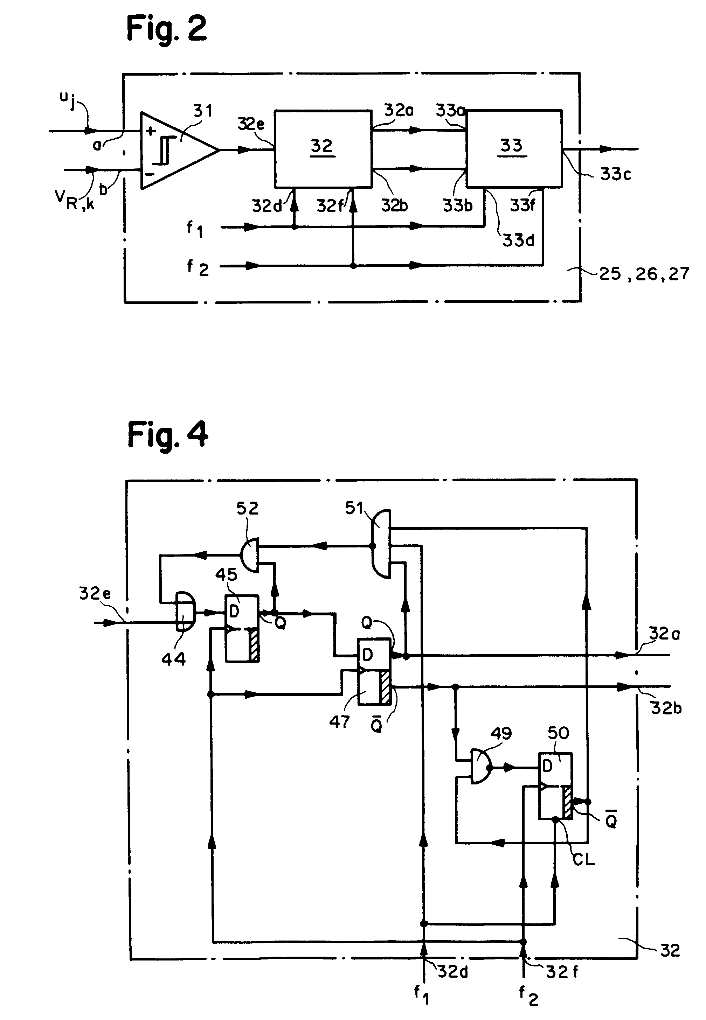

Die Ereignis-Detektoren 25 bis 27 besitzen z. B. den in der Fig. 2 dargestellten Aufbau. Sie sind in diesem Fall identisch aufgebaut und bestehen aus einem Komparator 31, einer Abtast- und Halte-Schaltung 32 sowie einem Ereignis-Integrator 33, die in der angegebenen Reihenfolge in Reihe hintereinander geschaltet sind, wobei zwei Ausgänge 32a und 32b der Abtast- und Halte-Schaltung 32 jeweils mit einem zugehörigen Eingang 33a bzw. 33b des Ereignis-Integrators 33 verbunden sind und ein Ausgang 33c des letzteren jeweils den Ausgang des betreffenden Ereignis-Detektors 25 bzw. 26 bzw. 27 bildet. Ein nichtinvertierender Eingang des Komparators 31 bildet den ersten Eingang a des Ereignis-Detektors 25, 26 und 27, an dem für die Phase $j =$ 1, 2 oder 3 die Spannung $u_j$ ansteht, während ein invertierender Eingang des Komparators 31 den zweiten Eingang b des Ereignis-Detektors 25, 26 und 27 bildet, an dem für die auszuwertenden Ereignisse k = 1, 2 oder 3 die Referenz-Gleichspannung $U_{R,k}$ ansteht. Die Takteingänge 32d und 32f der Abtast- und Halte-Schaltung 32 bzw. 33d und 33f des Ereignis-Integrators 33 werden jeweils von einem ersten bzw. zweiten Taktsignal gespeist, dessen Taktfrequenz $f_1$ bzw. $f_2$ ist. Die beiden Taktsignale sind Impuls-Sequenzen, deren Impulse in Funktion der Zeit vorzugsweise rechteckförmig sind. Es gelten z. B. $f_1 = 32$ Hz und $f_2 = 32$ kHz.

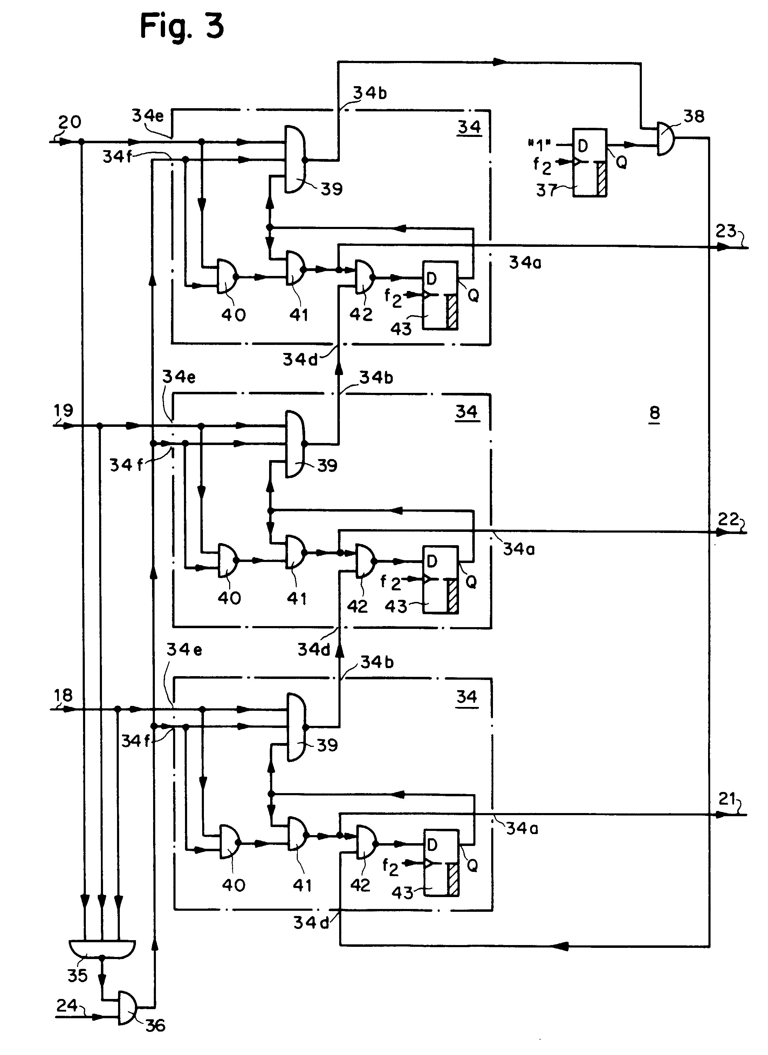

Das in der Fig. 3 dargestellte Steuergerät 8 enthält eine Steuereinheit 34 pro überwachte Phase, ein Nand-Gatter 35, ein erstes Und-Gatter 36, ein Flip Flop 37 und ein zweites Und-Gatter 38. Das Nand-Gatter 35 besitzt einen Eingang pro überwachte Phase. Bei der Überwachung von drei Phasen sind somit drei Steuereinheiten 34 und drei Eingänge des Nand-Gatters 35 vorhanden. Die Steuereinheiten 34 besitzen jeweils einen ersten Ausgang 34a, einen zweiten Ausgang 34b, einen ersten Eingang 34d, einen zweiten Eingang 34e und einen Freigabe-Eingang 34f. Die Freigabe-Eingänge 34f aller Steuereinheiten 34 sind miteinander und mit einem Ausgang des ersten Und-Gatters 36 verbunden. Ein Ausgang des Nand-Gatters 35 ist auf einen ersten Eingang des ersten Und-Gatters 36 geführt, dessen zweiter Eingang mit dem Freigabe-Eingang 24 des Steuergerätes 8 verbunden ist. Der Eingang 18 des Steuergerätes 8 ist mit einem ersten der drei Eingänge des Nand-Gatters 35 und mit dem zweiten Eingang 34e einer ersten der drei Steuereinheiten 34 verbunden. Der Eingang 19 des Steuergerätes 8 ist mit einem zweiten der drei Eingänge des Nand-Gatters 35 und mit dem zweiten Eingang 34e einer zweiten der drei Steuereinheiten 34 verbunden. Der Eingang 20 des Steuergerätes 8 ist mit einem dritten der drei Eingänge des Nand-Gatters 35 und mit dem zweiten Eingang 34e einer dritten der drei Steuereinheiten 34 verbunden. Der erste Ausgang 34a der ersten Steuereinheit 34 bildet den Ausgang 21, derjenige der zweiten Steuereinheit 34 den Ausgang 22 und derjenige der dritten Steuereinheit 34 den Ausgang 23 der Steuereinheit 8. Der zweite Ausgang 34b der ersten Steuereinheit 34 ist mit dem ersten Eingang 34d der zweiten Steuereinheit, derjenige der zweiten Steuereinheit 34 mit dem ersten Eingang 34d der dritten Steuereinheit 34 und derjenige der dritten Steuereinheit 34 mit einem ersten Eingang des zweiten Und-Gatters 38 verbunden, dessen zweiter Eingang mit einem Q-Ausgang des Flip Flops 37 verbunden ist. Das letztere ist z. B. ein D-Flip Flop. In diesem Fall besitzt er einen D-Eingang, an dem ein Logikwert "1" ansteht. Der Ausgang des zweiten Und-Gatters 38 ist mit dem ersten Eingang 34d der ersten Steuereinheit 34 verbunden.

Die Steuereinheit 34 enthält ein erstes Nand-Gatter 39, ein zweites Nand-Gatter 40, ein drittes Nand-Gatter 41, ein viertes Nand-Gatter 42 und ein Flip Flop 43. Das letztere ist vorzugsweise wieder ein D-Flip Flop und besitzt dann einen D-Eingang. Der zweite Eingang 34e und der Freigabe-Eingang 34f der Steuereinheit 34 sind je auf einen ersten bzw. zweiten Eingang des ersten und des zweiten Nand-Gatters 39 und 40 geführt. Der Ausgang des zweiten Nand-Gatters 40 ist mit einem ersten Eingang des dritten Nand-Gatters 41 verbunden, dessen Ausgang einerseits auf den ersten Ausgang 34a der Steuereinheit 34 und anderseits auf einen ersten Eingang des vierten Nand-Gatters 42 geführt ist. Der Ausgang des letzteren ist mit dem D-Eingang des Flip Flops 43 verbunden, dessen Q-Ausgang seinerseits mit einem dritten Eingang des ersten Nand-Gatters 39 und mit einem zweiten Eingang des dritten Nand-Gatters 41 verbunden ist. Der erste Eingang 34d der Steuereinheit 34 ist auf einen zweiten Eingang des vierten Nand-Gatters 42 geführt, während der Ausgang des ersten Nand-Gatters 39 den zweiten Ausgang 34b der Steuereinheit 34 bildet.

Die Takteingänge des Flip Flops 37 und aller Flip Flops 43 sind alle miteinander verbunden und werden jeweils vom zweiten Taktsignal mit der Taktfrequenz $f_2$ gespeist.

Der Empfänger 3 ist an einer ersten Phase des in der Regel mehrphasigen Energieversorgungsnetzes 2 angeschlossen, von der er ausschliesslich mit übertragenen Informationen gespeist wird. Im erfindungsgemässen Verfahren zum Betrieb des Empfängers 3 wird in der ersten Phase und in einer oder mehreren weiteren Phasen des Energieversorgungsnetzes 2 mindestens ein Ereignis überwacht, dessen Auftreten in einer der Phasen des Energieversorgungsnetzes 2 einen korrekten Empfang der übertragenen Informationen im Empfänger 3 erschwert oder verunmöglicht, wenn der letztere ausschliesslich von der betreffenden Phase mit den übertragenen Informationen gespeist wird. Dabei wird bei einem Auftreten eines überwachten Ereignisses in der ersten Phase des Energieversorgungsnetzes 2 die Speisung des Empfängers 3 mit übertragenen Informationen von der ersten auf eine zweite Phase des Energieversorgungsnetzes 2 so umgeschaltet, dass der Empfänger 3 anschliessend ausschliesslich von der zweiten Phase des Energieversorgungsnetzes 2 mit übertragenen Informationen gespeist wird. Wenn der Empfänger 3 dagegen ausschliesslich von der letzteren Phase mit übertragenen Informationen gespeist wird, dann wird bei einem Auftreten eines überwachten Ereignisses in der zweiten Phase des Energieversorgungsnetzes 2 die Speisung des Empfängers 3 mit Informationen von der zweiten auf eine dritte Phase des Energieversorgungsnetzes 2 so umgeschaltet, dass der Empfänger 3 anschliessend ausschliesslich von der dritten Phase des Energieversorgungsnetzes 2 mit übertragenen Informationen gespeist wird. Das Umschalten von der ersten auf die zweite Phase beziehungsweise von der zweiten auf die dritte Phase erfolgt jeweils mittels des in der Schaltanordnung 15;16;17 enthaltenen mehrstelligen Umschalters. Eines der überwachten Ereignisse einer Phase ist vorzugsweise eine Unterspannung der betreffenden Phase oder eine Überspannung der betreffenden Phase oder ein Nichtvorhandensein der Spannung $u_j$ der betreffenden Phase. In der Fig. 1 gilt die Annahme, dass jeweils alle drei dieser Ereignisse in jeder der drei Phasen und damit auch in jeder der drei Ereignisüberwachungs-Anordnungen 12 bis 14 überwacht werden, wobei allerdings das Überwachungs-Resultat nur eines der drei Ereignisse, z. B. dasjenige der Unterspannung, dem nachgeschalteten Steuergerät 8 über die Ausgänge 12a bis 14a zugeführt wird zwecks Auslösung des Umschaltens, wenn letzteres erforderlich sein sollte.

Das Umschalten von der ersten auf die zweite Phase beziehungsweise von der zweiten auf die dritte Phase erfolgt vorzugsweise jeweils, wenn keine Informationen über das Energieversorgungsnetz 2 übertragen werden. Zu diesem Zweck erzeugt der Empfänger 3 für die Dauer, während der keine Informationen übertragen und empfangen werden, einen Logikwert "1", der über den Ausgang 3a des Empfängers 3 und den Freigabe-Eingang 24 des Steuergerätes 8 dem Und-Gatter 36 (siehe Fig. 3) zugeleitet wird zwecks Freigabe des Steuergerätes 8, welches, nur wenn freigegeben, gegebenenfalls das Umschalten der Phasen veranlasst.

Die Spannungs-Reduzierer 9 bis 11 (siehe Fig. 1) reduzieren jeweils die Werte der zugehörigen Spannungen $u_1$ bis $u_3$, die z. B. in der Grössenordnung von 110 oder 220 Volt liegen, auf kleinere, in elektronischen Geräten übliche Werte von einigen Volt, die dann jeweils von den Ausgängen der Spannungteiler 9 bis 11 den Eingängen 1a bis 1c der Anordnung 1 zugeführt werden.

Die zu je einer der drei Phasen des Energieversorgungsnetzes 2 gehörenden Ereignisüberwachungs-Anordnungen 12 bis 14 überwachen gemäss Annahme jeweils drei Ereignisse. Ein erstes überwachtes Ereignis ist z. B., wie bereits erwähnt, die Unterspannung der betreffenden Phase und wird mittels des Ereignis-Detektors 25 sowie des Ereignis-Zählers 28 überwacht. Die Referenz-Gleichspannung $V_{R,1}$ stellt einen Grenzwert dar, ab dem eine Unterspannung vorliegt, und ist z. B. gleich $0{,}9 \cdot U_N$, wenn $U_N$ den Nenn-Effektivwert der Spannung $u_j$ bezeichnet. Ein zweites überwachtes Ereignis ist z. B. dann die Überspannung der betreffenden Phase und wird mittels des Ereignis-Detektors 26 sowie des Ereignis-Zählers 29 überwacht. Die Referenz-Gleichspannung $V_{R,2}$ stellt einen Grenzwert dar, ab dem eine Überspannung vorliegt, und ist z. B. gleich $1{,}1 \cdot U_N$. Ein drittes überwachtes Ereignis ist z. B. ein Netzausfall der betreffenden Phase und wird mittels des Ereignis-Detektors 27 sowie des Ereignis-Zählers 30 überwacht. Die Referenz-Gleichspannung $V_{R,3}$ stellt einen Grenzwert dar, ab dem ein Netzspannungsausfall vorliegt.

In den Ereignis-Detektoren 25 bis 27 (siehe Fig. 2) wandelt der Komparator 31 die mindestens annähernd sinusförmige Spannung $u_j$ um in ein in Funktion der Zeit rechteckförmiges Signal, dessen Frequenz 50Hz oder 60Hz beträgt und dessen Impulsdauer vom Wert der zugehörigen Referenz-Gleichspannungen $U_{R,k}$ abhängig ist. Wenn $U_{R,3}$ z. B. null Volt beträgt, arbeitet der Komparator 31 des Ereignis-Detektors 27 als Nulldurchgangs-Detektor ("zero crossing detector") und detektiert die Abwesenheit der Spannung $u_j$.

Das Auftreten des überwachten Ereignisses wird nur berücksichtigt und in den Ereignis-Zählern 28 bis 30 (siehe Fig. 1) gezählt, wenn das Ereignis mindestens eine bestimmte vorgegebene Zeit, z. B. 500 ms, andauert. Eine Erholungszeit grösser als die vorgegebene Zeit ist dann erforderlich, damit zwei aufeinanderfolgend auftretende Ereignisse in den Ereignis-Zählern 28 bis 30 gezählt werden. Die rechteckförmig periodischen Ausgangssignale der Komparatoren 31 werden zu diesem Zweck zuerst einmal mittels der zugehörigen Abtast- und Halte-Schaltung 32 ("sample and hold circuit") z. B. alle 32ms mittels der Taktfrequenz $f_1 = 32$ Hz für die Dauer von z. B. 32 $\mu$s, was der Taktfrequenz $f_2 =$

32kHz entspricht, abgetastet. Wenn ein überwachtes Ereignis dabei mindestens einmal während der Dauer von 32 ms auftritt, wird ein Logikwert "1" abgespeichert. Wenn dies mehrmals, z. B. 16 mal, zeitlich aufeinanderfolgend geschieht, d. h. wenn ein im zugehörigen Ereignis-Integrator 33 (siehe Fig. 2) enthaltener 4Bit-Zähler einen Zählwert 16 erreicht, was bedeutet, dass das Ereignis bereits 16.32 ms = 500 ms andauert, dann wird der zugehörige Ereignis-Zähler 28 bzw. 29 bzw. 30 um einen Wert Eins inkrementiert. Das Ereignis muss somit kontinuierlich während mindestens 500 ms vorhanden sein, bevor es in einem Ereignis-Zähler 28 bzw. 29 bzw. 30 registriert wird. Der Inhalt der Ereignis-Zähler 28 bis 30 kann z. B. zu Anzeigezwecken, zu statistischen Zwecken oder zur Rettung von provisorisch abgespeicherten Messdaten in unverlierbare Speicher verwendet werden.

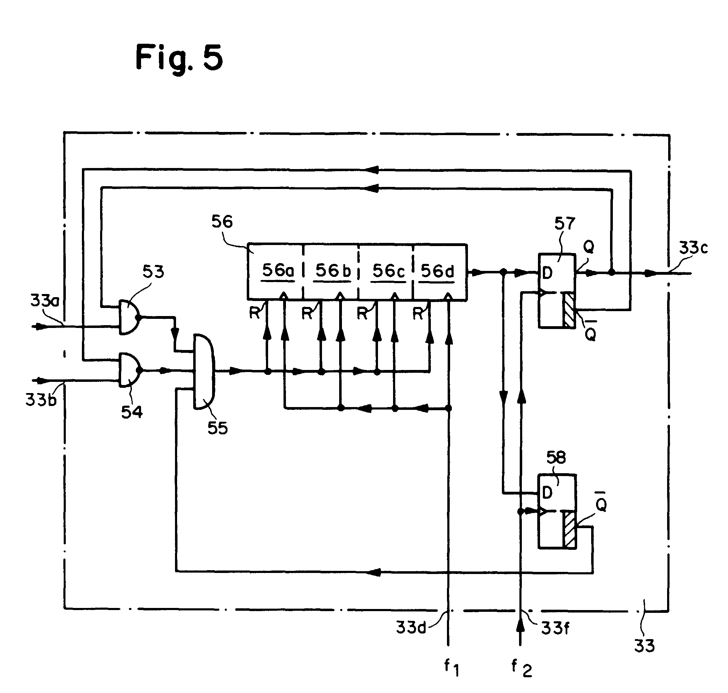

Die Abtast- und Halteschaltung 32 besitzt z. B. den in der Fig. 4 dargestellten Aufbau und besteht dann aus einem Oder-Gatter 44, einem ersten Flip Flop 45, einem zweiten Flip Flop 47, einem ersten Nand-Gatter 49, einem dritten Flip Flop 50, einem zweiten Nand-Gatter 51 und einem Und-Gatter 52. Ein Eingang 32e der Abtast- und Halte-Schaltung 32 ist auf einen ersten Eingang des Oder-Gatters 44 geführt, dessen Ausgang mit einem D-Eingang des Flip Flops 45 verbunden ist. Ein Q-Ausgang des letzteren ist mit einem D-Eingang des Flip Flops 47 verbunden und auf einen ersten Eingang des Und-Gatters 52 geführt, dessen Ausgang mit einem zweiten Eingang des Oder-Gatters 44 verbunden ist. Ein Q-Ausgang des Flip Flops 47 bildet einerseits den Ausgang 32a der Abtast- und Halte-Schaltung 32 und ist anderseits mit einem ersten Eingang des Nand-Gatters 51 verbunden. Der Ausgang des letzteren ist auf einen zweiten Eingang des Und-Gatters 52 geführt. Ein $\overline{Q}$-Ausgang des Flip Flops 47 bildet einerseits den Ausgang 32b der Abtast- und Halte-Schaltung 32 und ist anderseits auf einen ersten Eingang des Nand-Gatters 49 geführt, dessen Ausgang mit einem D-Eingang des Flip Flops 50 verbunden ist. Der $\overline{Q}$-Ausgang des letzteren ist auf einen zweiten Eingang des Nand-Gatters 49 und auf einen zweiten Eingang des Nand-Gatters 51 geführt. Der Takteingang 32d, an dem das erste Taktsignal mit der Taktfrequenz $f_1$ ansteht, ist mit einem dritten Eingang des Nand-Gatters 51 und einem Rückstelleingang CL ("clear") des Flip Flops 50 verbunden. Der Takteingang 32f, an dem das zweite Taktsignal mit der Taktfrequenz $f_2$ ansteht, ist mit den Takteingängen der drei Flip Flops 45, 47 und 50 verbunden.

Der Ereignis-Integrator 33 besitzt z. B. den in der Fig. 5 dargestellten Aufbau und besteht dann aus einem ersten Nand-Gatter 53, einem zweiten Nand-Gatter 54, einem Und-Gatter 55, einem Binärzähler 56, der aus vier 1Bit-Zellen 56a, 56b, 56c und 56d besteht, einem ersten Flip Flop 57 und einem zweiten Flip Flop 58. Ein erster Eingang des Nand-Gatters 53 bildet den Eingang 33a und ein erster Eingang des Nand-Gatters 54 den Eingang 33b jeweils des Ereignis-Integrators 33. Die Ausgänge der Nand-Gatter 53 und 54 sind jeweils auf einen ersten bzw. zweiten Eingang des Und-Gatters 55 geführt, während ein dritter Eingang des letzteren mit einem $\overline{Q}$-Ausgang des Flip Flops 58 verbunden ist. Der Ausgang des Und-Gatters 55 ist auf die Rückstelleingänge R ("reset") aller 1Bit-Zellen 56a bis 56d des Binärzählers 56 geführt, während der Takteingang 33d, an dem das erste Taktsignal der Frequenz $f_1$ ansteht, mit dem Takteingang aller 1Bit-Zellen 56a bis 56d des Binärzählers 56 verbunden ist. Der Ausgang des letzteren ist auf die D-Eingänge der beiden Flip Flops 57 und 58 geführt, deren Takteingänge mit dem Takteingang 33f, an dem das zweite Taktsignal der Frequenz $f_2$ ansteht, verbunden sind. Ein Q-Ausgang des Flip Flops 57 bildet einerseits den Ausgang 33c des Ereignis-Integrators 33 und ist anderseits auf einen zweiten Eingang des Nand-Gatters 53 geführt, während ein zweiter Eingang des Nand-Gatters 54 mit einem $\overline{Q}$-Ausgang des Flip Flops 57 verbunden ist.

Nachfolgend gilt die Annahme, dass der Binärzähler 56 und alle Flip Flops 45, 47, 50, 57 und 58 zu Beginn, z. B. bei der Einschaltung der Netzspannung, mittels einer in der Zeichnung nicht dargestellten allgemeinen Rückstellung auf Null zurückgestellt werden. Wenn die Spannung $u_j$ grösser als die als Schwellwert verwendete Referenz-Gleichspannung $V_{R,k}$ ist (siehe Fig. 2), dann erscheint am Eingang 32e der Abtast- und Halte-Schaltung 32 ein aus rechteckförmigen Impulsen bestehendes Ausgangssignal des Komparators 31, dessen Logikwert "1", sobald vorhanden, mit der nächsten Flanke des zweiten Taktsignals (Frequenz 32 kHz, Periode 32 μs) in das Flip Flop 45 geladen und dort mindestens solange abgespeichert wird, bis dass die nächste Abtastung des Ausgangssignals des Komparators 31 erfolgt. Der Inhalt des Flip Flops 45 wird während des ersten Taktsignals (Frequenz 32 Hz, Periode 32 ms) fortlaufend, jeweils um eine Periode (32 μs) des zweiten Taktsignals verzögert, in das Flip Flop 47 übernommen. Während der Impulsdauer (16 ms) des ersten Taktsignals wird dagegen der zu Beginn der Impulsdauer im Flip Flop 45 gespeicherte Logikwert in das Flip Flop 47 übernommen und dort für den Rest der Impulsdauer abgespeichert. Ist zu Beginn der Impulsdauer des ersten Taktsignals (32 Hz) am Ausgang 32a ein Logikwert 1 vorhanden, d. h. ist $u_j \geq V_{R,k}$, dann erzeugt das Flip Flop 50 am Ausgang des Nand-Gatters 51 einen kurzen negativen Impuls, der das Und-Gatter 52 während 32 μs sperrt, so dass gegebenenfalls der dann gerade am Eingang 32e anstehende Wert des Ausgangssignals des Komparators 31 in das Flip Flop 45 übernommen werden kann. Der letztere bildet somit zusammen mit den beiden Gattern 52 und 44 die eigentliche Abtast- und Haltschaltung, während das Gatter 51 zusammen mit dem Flip Flop 50 und dem Gatter 49 periodische Abtastimpulse der Dauer 32 μs und der Periode 32 ms erzeugt. An den beiden Ausgängen des Flip Flops 47 und damit auch an den beiden Ausgängen 32a und 32b der Abtast- und Halte-Schaltung 32 und den beiden Eingängen 33a und 33b des Ereignis-Integrators 33 sind jeweils der Logikwert "1" bzw. "0" vorhanden, wenn $u_j \geq V_{R,k}$, oder umgekehrt der Logikwert "0" bzw. "1", wenn $u_j \leq V_{R,k}$. In beiden Fällen zählt der Impulszähler 56 (siehe Fig. 5) die Impulse des ersten Taktsignals der Taktfrequenz $f_1 = 32Hz$. Sobald der Binärzähler 56 z. B. den Zählwert 16 erreicht, werden die Flip Flops 57 und 58 gesetzt als Zeichen, dass das überwachte Ereignis während der Dauer von 16/32 ms = 500 ms stattgefunden hat.

Die Ausgangssignale, die im Betrieb an den Ausgängen 21 bis 23 des Steuergerätes 8 (siehe Fig. 3) und damit an den Steuereingängen 15e, 16e und 17e der Schaltanordnung 15;16;17 anstehen, sind, um beim Umschalten einen elektrischen Kurzschluss zwischen zwei Phasen zu vermeiden, so ausgebildet, dass ein geschlossener Schaltkontakt des mehrstelligen Umschalters beziehungsweise der Schalter der Schaltanordnung 15;16;17 im Betrieb erst geöffnet wird bevor ein anderer der vorhandenen Schaltkontakte des Umschalters bzw. der Schalter geschlossen wird. Der Signaleingang 3e des Empfängers 3 ist dabei jeweils über die Schaltanordnung 15;16; 17 mit einer einzigen nicht defektiven Phase des Energieversorgungsnetzes 2 verbunden, da nur eine nicht defektive Phase einen korrekten Empfang der über das Energieversorgungsnetz 2 übertragenen Informationen gewährleistet. Dabei ist eine nicht defektive Phase des Energieversorgungsnetzes 2 jeweils gekennzeichnet durch ein Nichtauftreten eines der überwachten Ereignisse. Eine einzige nicht defektive Phase der drei angeschlossenen Phasen wird somit über die Schaltanordnung 15;16;17 auf den Signaleingang 3e des Empfängers 3 gegeben, wobei das Steuergerät 8 die nicht defektive Phase mittels der Ausgangssignale der Ereignis-Detektoren 25 bzw. 26 bzw. 27 ermittelt und dementsprechend einen einzigen zur betreffenden Phase gehörenden Schalter der Schaltanordnung 15;16;17 betätigt bzw. eine zur betreffenden Phase gehörende Stellung des Umschalters der Schaltanordnung 15;16;17 wählt.

Die Eingänge 18 bis 20 des Steuergerätes 8 (siehe Fig. 3) besitzen einen Logikwert "1", wenn das überwachte Ereignis in der zugehörigen Phase auftritt. Die Ausgänge 21 bis 23 des Steuergerätes 8 werden mittels negativer Logik betrieben, d. h. ein dort erscheinender Logikwert "0" schaltet den zugehörigen Schaltkontakt in der nachgeschalteten Schaltanordnung 15;16,17 ein. Dabei ist jeweils nur an einem einzigen der Ausgänge 21 bis 23 ein Logikwert "0" vorhanden. Das Flip Flop 37 arbeitet als Verzögerungsglied und gewährleistet, dass, wenn alle drei Phasen des Energieversorgungsnetzes 2 nicht defektiv sind, die zum Eingang 18 gehörende Steuereinheit 34 dominierend einen Logikwert "0" am Ausgang 21 erzeugt, so dass der zum Teil 15 der Schaltanordnung 15;16;17 gehörende Schaltkontakt ausschliesslich eingeschaltet wird. Gleichzeitig wird das zur betreffenden Steuereinheit 34 gehörende Flip Flop 43 gesetzt, so dass das zugehörige Nand-Gatter 39 das Nand-Gatter 42 der benachbarten zweiten und das Nand-Gatter 39 der letzteren das Nand-Gatter 42 der verbleibenden dritten Steuereinheit 34 sperrt, wodurch das Setzen von deren Flip Flop 43 jeweils verhindert wird.

Tritt jetzt ausserhalb einer Informationsübertragung, d. h. bei freigegebenem Und-Gatter 36, ein überwachtes Ereignis z. B. in den zu den Eingängen 18 und 19 gehörenden Phasen des Energieversorgungsnetzes 2 auf, dann sind an den beiden Eingängen des Nand-Gatters 40 der zum Eingang 18 gehörenden Steuereinheit 34 je ein Logikwert "1" vorhanden, so dass am Ausgang 21 des Steuergerätes 8 ein Logikwert "1" erscheint und der zugehörige Schaltkontakt der Schaltanordnung 15;16;17 geöffnet wird. Ein Taktimpuls verzögert wird dann durch das zweite Taktsignal ein Logikwert "0" in das Flip Flop 43 der betreffenden Steuereinheit 34 eingelesen, wodurch deren Nand-Gatter 39 das Nand-Gatter 42 der zum Eingang 19 gehörenden Steuereinheit 34 freigibt, was jedoch zuerst ohne Folgen bleibt, da an den beiden Eingängen des Nand-Gatters 40 der letzteren ebenfalls, da die zugehörige Phase defekt ist, je ein Logikwert "1" vorhanden ist, so dass am Ausgang 22 des Steuergerätes 8 weiterhin ein Logikwert "1" ansteht und der zugehörige Schaltkontakt der Schaltanordnung 15;16;17 geöffnet bleibt. Ein Taktimpuls verzögert wird jedoch durch das zweite Taktsignal ein Logikwert "1" in das Flip Flop 43 der zum Eingang 19 gehörenden Steuereinheit 34 eingelesen, wodurch deren Nand-Gatter 39 das Nand-Gatter 42 der zum Eingang 20 gehörenden Steuereinheit 34 freigibt. Dort steht an einem Eingang des Nand-Gatters 40 ein Logikwert "0" an, wodurch ein Logikwert "0" am Ausgang 23 des Steuergerätes 8 erscheint und veranlasst, dass der zugehörige Schaltkontakt im Teil 17 der Schaltanordnung 15;16;17 geschlossen wird. Ausserdem wird ein Taktimpuls verzögert durch das zweite Taktsignal ein Logikwert "1" in das Flip Flop 43 der zum Eingang 20 gehörenden Steuereinheit 34 eingelesen, wodurch deren Nand-Gatter 39 über das Flip Flop 37 das Nand-Gatter 42 der zum Eingang 18 gehörenden Steuereinheit 34 sperrt. Durch die angegebene zeitliche Reihenfolge der Schalthandlungen ist jeweils gewährleistet, dass ein geschlossener Schaltkontakt der Schaltanordnung 15;16;17 zuerst geöffnet wird, bevor ein anderer Schaltkontakt der letzteren geschlossen wird.

Tritt das überwachte Ereignis jedoch innerhalb einer Informationsübertragung auf, dann verhindert das Und-Gatter 36 zuerst die Umschaltung, bis dass die Informationsübertragung beendet ist. Erst dann gibt das Und-Gatter 36 das Steuergerät 8 frei, so dass letzteres unverzüglich die Umschaltung vornehmen kann.

**Patentansprüche**

1.  Verfahren zum Betrieb eines Empfängers (3), der mit Informationen gespeist wird, die über ein elektrisches Energieversorgungsnetz (2) übertragen werden, und der an einer ersten Phase des Energieversorgungsnetzes (2) angeschlossen ist, wobei er ausschliesslich von der ersten Phase mit den übertragenen Informationen gespeist wird, dadurch gekennzeichnet, dass in der ersten Phase und in einer oder mehreren weiteren Phasen des Energieversorgungsnetzes (2) mindestens ein Ereignis überwacht wird, dessen Auftreten in einer der Phasen einen korrekten Empfang der übertragenen Informationen im Empfänger (3) erschwert oder verunmöglicht, wenn der letztere ausschliesslich von der betreffenden Phase mit den übertragenen Informationen gespeist wird.

2. Verfahren nach Anspruch 1, dadurch gekennzeichnet, dass bei einem Auftreten eines überwachten Ereignisses in der ersten Phase die Speisung des Empfängers (3) mit übertragenen Informationen von der ersten auf eine zweite Phase des Energieversorgungsnetzes (2) so umgeschaltet wird, dass der Empfänger (3) ausschliesslich von der zweiten Phase mit übertragenen Informationen gespeist wird.

3. Verfahren nach Anspruch 2, dadurch gekennzeichnet, dass, wenn der Empfänger (3) von der zweiten Phase mit übertragenen Informationen gespeist wird, bei einem Auftreten eines überwachten Ereignisses in der zweiten Phase die Speisung des Empfängers (3) mit Informationen von der zweiten auf eine dritte Phase des Energieversorgungsnetzes (2) so umgeschaltet wird, dass der Empfänger (3) ausschliesslich von der dritten Phase mit übertragenen Informationen gespeist wird.

4. Verfahren nach Anspruch 2 oder 3, dadurch gekennzeichnet, dass von der ersten auf die zweite Phase beziehungsweise von der zweiten auf die dritte Phase umgeschaltet wird, wenn keine Informationen über das Energieversorgungsnetz (2) übertragen werden.

5. Verfahren nach einem der Ansprüche 2 bis 4, dadurch gekennzeichnet, dass von der ersten auf die zweite Phase beziehungsweise von der zweiten auf die dritte Phase umgeschaltet wird mittels eines mehrstelligen Umschalters, der im Betrieb nur einen einzigen geschlossenen Kontakt besitzt, welcher beim Umschalten zuerst geöffnet wird bevor ein anderer Kontakt des mehrstelligen Umschalters geschlossen wird.

6. Verfahren nach einem der Ansprüche 1 bis 5, dadurch gekennzeichnet, dass ein überwachtes Ereignis einer Phase eine Unterspannung der betreffenden Phase ist.

7. Verfahren nach einem der Ansprüche 1 bis 6, dadurch gekennzeichnet, dass ein überwachtes Ereignis einer Phase eine Überspannung der betreffenden Phase ist.

8. Verfahren nach einem der Ansprüche 1 bis 7, dadurch gekennzeichnet, dass ein überwachtes Ereignis einer Phase ein Nichtvorhandensein der Spannung ($u_j$) der betreffenden Phase ist.

9. Anordnung (1) zur Durchführung des Verfahrens nach einem der Ansprüche 1 bis 8, dadurch gekennzeichnet,

- dass für die Phasen des Energieversorgungsnetzes (2), in denen mindestens ein Ereignis überwacht wird, jeweils eine Ereignisüberwachungs-Anordnung (12 bzw. 13 bzw. 14) vorhanden ist zwecks Überwachung des Ereignisses,
- dass zum Anschluss der Phasen dienende Eingänge (1a bis 1c) der Anordnung (1) je auf einen Eingang (12e bzw. 13e bzw. 14e) der zur betreffenden Phase gehörenden Ereignisüberwachungs-Anordnung (12 bzw. 13 bzw. 14) geführt sind und über je einen zur betreffenden Phase gehörenden Teil (15 bzw. 16 bzw. 17) einer Schaltanordnung (15;16;17) mit dem Empfänger (3) verbunden sind, und
- dass je ein Ausgang (12a bzw. 13a bzw. 14a) der Ereignisüberwachungs-Anordnungen (12 bis 14) über ein Steuergerät (8) mit einem zugehörigen Steuereingang (15e bzw. 16e bzw. 17e) der Schaltanordnung (15;16;17) verbunden ist.

10. Anordnung nach Anspruch 9, dadurch gekennzeichnet, dass die Schaltanordnung (15;16;17) einen mehrstelligen Umschalter enthält, der soviele Schaltstellungen besitzt, wie Anzahl angeschlossene Phasen vorhanden sind, in denen mindestens ein Ereignis überwacht wird.

11. Anordnung nach Anspruch 10, dadurch gekennzeichnet, dass die jeweils zu einer Phase gehörenden Teile (15 bis 17) der Schaltanordnung (15;16; 17) je einen Ein/Aus-Schalter (S) enthalten und dass die Ein/Aus-Schalter (S) der Schaltanordnung (15;16;17) zusammen den mehrstelligen Umschalter bilden.

**Claims**

1. A method of operating a receiver (3) which is fed with items of information transmitted by way of an electrical power supply network (2) and which is connected to a first phase of the power supply network (2), wherein it is fed exclusively from the first phase with the transmitted items of information,

characterised in that

in the first phase and in one or more further phases of the power supply network (2) at least one event is monitored, the occurrence of which in one of the phases renders difficult or impossible correct reception of the transmitted items of information in the receiver (3) if the latter is fed exclusively from the phase in question with the transmitted items of information.

2. A method according to claim 1 characterised in that when a monitored event occurs in the first phase the feed of the receiver (3) with transmitted items of information is switched over from the first phase to the second phase of the power supply network (2) so that the receiver (3) is fed exclusively from the second phase with transmitted items of information.

3. A method according to claim 2 characterised in that, if the receiver (3) is fed with transmitted items of information from the second phase, upon the occurrence of a monitored event in the second phase the feed of items of information to the receiver (3) is switched over from the second phase to a third phase of the power supply network (2) so that the receiver (3) is fed exclusively from the third phase with transmitted items of information.

4. A method according to claim 2 or claim 3 characterised in that the receiver is switched over from the first phase to the second phase or from the second phase to the third phase respectively when no items of information are transmitted by way of the power supply network (2).

5. A method according to one of claims 2 to 4 characterised in that the receiver is switched over from the first phase to the second phase or from the second phase to the third phase respectively by means of a multi-position change-over switch which in operation has only a single closed contact which when switching-over occurs is first opened before another contact of the multi-position change-over switch is closed.

6. A method according to one of claims 1 to 5 characterised in that a monitored event of a phase is an undervoltage of the phase in question.

7. A method according to one of claims 1 to 6 characterised in that a monitored event of a phase is an overvoltage of the phase in question.

8. A method according to one of claims 1 to 7 characterised in that a monitored event of a phase is an absence of the voltage ($u_j$) of the phase in question.

9. An arrangement (1) for carrying out the method according to one of claims 1 to 8 characterised in that

- for each of the phases of the power supply network (2) in which at least one event is monitored there is a respective event monitoring arrangement (12, 13, 14 respectively) for the purposes of monitoring the event,
- inputs (la to 1c) of the arrangement (1) which serve for connection of the phases are taken to a respective input (12e, 13e, 14e respectively) of the event monitoring arrangement (12, 13, 14 respectively) associated with the phase in question and are connected to the receiver (3) by way of a respective part (15, 16, 17 respectively), associated with the phase in question, of a switching arrangement (15; 16: 17), and
- a respective output (12a, 13a, 14a respectively) of the event monitoring arrangements (12 to 14) is connected by way of a control device (8) to an associated control input (15e, 16e, 17e respectively) of the switching arrangement (15; 16; 17).

10. An arrangement according to claim 9 characterised in that the switching arrangement (15; 16; 17) includes a multi-position change-over switch which has as many switching positions as the number of connected phases in which at least one event is monitored.

11. An arrangement according to claim 10 characterised in that the parts (15 to 17) of the switching arrangement (15; 16; 17) which are respectively associated with a phase each include a respective on/off switch (S) and that the on/off switches (S) of the switching arrangement (15; 16; 17) together form the multi-position change-over switch.

**Revendications**

1. Procédé d'exploitation d'un récepteur (3) qui est alimenté en informations transmises par un réseau d'alimentation en énergie électrique (2) et qui est connecté à une première phase du réseau d'alimentation en énergie (2) en étant alimenté en les informations transmises exclusivement par la première phase,

caractérisé en ce que

au moins un évènement est surveillé dans la première phase et dans l'une ou plusieurs des autres phases, son apparition dans l'une des phases rendant difficile ou impossible une réception correcte des informations transmises dans le récepteur (3) lorsque ce dernier est alimenté en les informations transmises exclusivement par la phase correspondante.

**2.** Procédé selon la revendication 1, caractérisé en ce que, lors de l'apparition d'un événement surveillé dans la première phase, l'alimentation du récepteur (3) en informations transmises est commutée de la première sur une deuxième phase du réseau d'alimentation en énergie (2) de manière que le récepteur (3) soit alimenté en informations transmises exclusivement par la deuxième phase.

**3.** Procédé selon la revendication 2, caractérisé en ce que, lorsque le récepteur (3) est alimenté en informations transmises par la deuxième phase, en cas d'apparition d'un phénomène surveillé dans la deuxième phase, l'alimentation du récepteur (3) en informations est commutée de la deuxième à la troisième phase du réseau d'alimentation en énergie (3) de manière que le récepteur (3) soit alimenté en informations transmises exclusivement par la troisième phase.

**4.** Procédé selon la revendication 2 ou 3, caractérisé en ce qu'une commutation de la première à la deuxième phase, respectivement de la deuxième à la troisième phase est effectuée lorsque aucune information n'est transmise par le réseau d'alimentation en énergie (2).

**5.** Procédé selon l'une des revendications 2 à 4, caractérisé en ce qu'une commutation de la première à la deuxième phase, respectivement de la deuxième à la troisième phase est effectuée au moyen d'un commutateur à plusieurs positions qui, en service, n'a qu'un unique contact qui est fermé et qui est tout d'abord ouvert lors d'une commutation avant qu'un autre contact du commutateur à plusieurs positions soit fermé.

**6.** Procédé selon l'une des revendications 1 à 5. caractérisé en ce qu'un évènement surveillé d'une phase est une sous-tension de la phase correspondante.

**7.** Procédé selon l'une des revendications 1 à 6. caractérisé en ce qu'un évènement surveillé d'une phase est une surtension de la phase correspondante.

**8.** Procédé selon l'une des revendications 1 à 7, caractérisé en ce qu'un phénomène surveillé d'une phase est une absence de tension ($U_3$) de la phase correspondante.

**9.** Dispositif (1) de mise en oeuvre du procédé selon l'une des revendications 1 à 8, caractérisé

-   en ce qu'un dispositif de surveillance d'un évènement (12 ou 13 ou 14) est présent pour chacune des phases du réseau d'alimentation en énergie (2) dans lesquelles au moins un évènement est surveillé en vue du contrôle de l'évènement.

-   en ce que chacune des entrées (la à 1c) du dispositif (1) qui servent à la connexion des phases est branchée à une entrée (12e ou 13e ou 14e) du dispositif de surveillance de l'évènement (12 ou 13 ou 14) appartenant à la phase correspondante et est reliée au récepteur (3) par l'un des éléments (15 ou 16 ou 17) d'un dispositif de commutation (15 ; 16 ; 17) qui appartient à la phase correspondante et

    en ce qu'une sortie (12a ou 13a ou 14a) des dispositifs de surveillance d'un évènement (12 à 14) est raccordée par un appareil de commande (8) à une entrée correspondante de commande (15e ou 16e ou 17e) du dispositif de commutation (15 ; 16 ; 17).

**10.** Dispositif selon la revendication 9, caractérisé en ce que le dispositif de commutation (15 ; 16 ; 17) comprend un commutateur à plusieurs positions qui possède autant de positions de commutation que le nombre des phases connectées qui existent et dans lesquelles au moins un évènement est surveillé.

**11.** Dispositif selon la revendication 10, caractérisé en ce que chacun des éléments (15 à 17) du dispositif de commutation (15 ; 16 ; 17) qui appartient à une phase comprend un interrupteur (S) et en ce que les interrupteurs (S) du dispositif de commutation (15 ; 16 ; 17) forment ensemble le commutateur à plusieurs positions.

Fig. 1

EP 0 604 678 B1

EP 0 604 678 B1

# Fig. 2

# Fig. 4

EP 0 604 678 B1

# Fig. 3

# Fig. 5